# EUROPÄISCHE PATENTANMELDUNG

(11) **EP 1 143 763 A1**
(43) Veröffentlichungstag der Anmeldung: **10.10.2001**
(21) Anmeldenummer: 01440041.0
(22) Anmeldetag: 22.02.2001
(51) Int. Cl.: H04Q 11/04

(54) **Netzabschlusseinrichtung und Verfahren zum Filtern von Signalen**

(30) Priorität: 09.03.2000 DE 10011121
(71) Anmelder: ALCATEL, 75008 Paris (FR)
(72) Erfinder: Aschrafi, Bagher, 73240 Wendingen (DE)
(74) Vertreter: Menzietti, Domenico, Dipl.-Ing

(57) **Zusammenfassung**

Die Erfindung stellt insbesondere für ein Kommunikationssystem, in dem XDSL mit ISDN/POTS kombiniert wird, insbesondere eine Einrichtung (3, 6) zur Filterung von ISDN-Signalen aus Signalgemischen beinhaltend eine ISDN-Signalkomponente und eine ISDN-Gleichstromkomponente vor, die dadurch gekennzeichnet ist, dass die Einrichtung (3, 6) eine Reihenschaltung aus einer ersten Weiche (8), einem Filter (9) und einer Verarbeitungseinrichtung (10) aufweist, dass die Weiche (8) geeignet ist, die ISDN-Signalkomponente über das Filter (9) zur Verarbeitungseinrichtung (10) weiterzuleiten und die ISDN-Gleichstromkomponenten über einen separaten Pfad zu einem DC/DC-Wandler (13) weiterzuleiten.

## Beschreibung

Die Erfindung betrifft eine Netzabschlusseinrichtung gemäß dem Oberbegriff des Patentanspruchs 1, ein Verfahren zum Filtern von Signalen gemäß dem Oberbegriff des Patentanspruchs 7 sowie eine Einrichtung gemäß dem Oberbegriff des Patentanspruchs 10.

In heutigen Telekommunikationsnetzen werden vielfach XDSL-Techniken zum Anschluss von Teilnehmern verwendet. DSL bedeutet Digital Subscriber Line, d.h. ein Teilnehmer erhält einen digitalen Zugang mit einer Datenrate im Megabit-Bereich. Dies ist insbesondere für die Anbindung ans Internet günstig, da das downloaden von Informationen, die vielfach auch Bilder beinhalten, beschleunigt wird. X steht beispielsweise für A, S, H oder V, wobei A Asynchron, S Synchron, H High bitrate und V Very high bitrate bedeutet. Beim Teilnehmer wird beispielsweise ein ADSL-Modem installiert, über das er Zugang zu verschiedenen Diensten hat. Zur Integration von Internetdiensten und Sprach- und/oder Bilddiensten wird über eine ADSL-Leitung auch ISDN oder POTS übertragen, ISDN=Integrated Services Digital Network, POTS= Plain Old Telefon Service.

Das ISDN dient z.B. dazu, digitale Telefonsignale und/oder digitale Bildtelefonsignale zu übertragen. Das POTS dient dazu, analoge Telefonsignale zu übertragen. Ein Teilnehmer, der bisher nur einen analogen Telefonanschluss hatte, kann seinen Anschluss mit ADSL aufrüsten, derart, dass er weiterhin analog telefonieren kann, gleichzeitig aber nun im Internet surfen kann.

Um insbesondere Sprache über ADSL zu übertragen werden somit ISDN oder POTS genutzt. Entweder ISDN oder POTS werden gleichzeitig mit ADSL zu einem Teilnehmer übertragen. ISDN und POTS werden in einem ersten Frequenzbereich, ADSL in einem zweiten Frequenzbereich übertragen. Die beiden Frequenzbereiche überlappen nicht. Es wird eine Vorrichtung benötigt, die ISDN und POTS Signale sowohl untereinander als auch von den XDSL Signalen trennt. Üblicherweise wird ein POTS Filter und ein ISDN Filter verwendet. Sowohl bei ISDN als auch bei POTS werden Gleichstromkomponenten zum Zwecke der Fernspeisung mit übertragen. Auf Grund der Gleichstromkomponenten werden zum Aufbau der Filter Spulen in den Längszweigen benötigt. Die Spulen sind teuer, do sie hohen Anforderungen genügen müssen.

Die Erfindung offenbart eine Netzabschlusseinrichtung gemäß Patentanspruch 1, ein Verfahren zum Filtern von Signalen gemäß Patentanspruch 7 sowie eine Einrichtung gemäß Patentanspruch 10.

Die Erfindung stellt insbesondere eine Einrichtung zur Verfügung, die eine Weiche zur Trennung eines empfangenen Signalgemisches beinhaltend eine Signalkomponente und eine Gleichstromkomponente und eine Verarbeitungseinrichtung zur Verarbeitung der Signalkomponente beinhaltet. Zwischen Weiche und Verarbeitungseinrichtung ist ein Filter geschaltet. Die Einrichtung ist insbesondere ausgestaltet als ISDN-Netzabschlusseinrichtung beinhaltend eine Weiche zur Trennung eines empfangenen Signalgemisches beinhaltend eine ISDN-Signalkomponente und eine ISDN-Gleichstromkomponente und eine Verarbeitungseinrichtung zur Verarbeitung der ISDN-Signalkomponente. Zwischen Weiche und Verarbeitungseinrichtung ist ein ISDN-Filter geschaltet. Aus zwei im Stand der Technik benötigten Bauteilen, nämlich einem externen Filter und einer handelsüblichen Netzabschlusseinrichtung, die beide eine externe Stromversorgung benötigen, wird eine neue Netzabschlusseinrichtung geschaffen, in die die Filtereigenschaft integriert ist. Dadurch werden die Herstellungskosten und die Installationskosten gesengt. Die Herstellungskosten können um 60% gesengt werden, da dass Filter nun auf die bereits vorhandene Platine integrierbar ist, so dass sich das Gehäuse der neuen Netzabschlusseinrichtung in seiner Größe nicht vom Gehäuse einer handelsüblichen Netzabschlusseinrichtung unterscheidet.

Die Gleichstromkomponente der Fernspeisung wird von den eigentlichen Nutzinformationssignalen für ISDN getrennt, z.B. unter Verwendung eines Kondensators, und über einen separaten Pfad weitergeleitet sowie zur Stromversorgung der internen Bauelemente der Einrichtung genutzt. Die zu filternden Signale enthalten damit keine Gleichstromkomponente mehr, d.h. keinen DC-Offset. Dadurch können Filter mit einem einfacheren Aufbau verwendet werden, z.B. Kondensatoren statt Spulen in den Längszweigen der Filter oder Filter mit einer niedrigeren Spannungsverträglichkeit, z.B. im Bereich von 10 Volt bis 15 Volt statt wie bisher 100 Volt. Kondensatoren haben kleinere Abmessungen als Spulen, sind billiger und können einfacher eingebaut werden. Kondensatoren sind auch integrierbar in eine integrierte Schaltung. Die Filter werden somit kostengünstiger. Die Filter können als passive Bauelemente ausgelegt sein, wodurch Strom gespart werden kann. Die Filter können auch aus aktiven Komponenten aufgebaut sein, z.B. mittels Thyristoren.

Auf einfache Art und Weise wird somit insbesondere eine kostengünstige Integration von ADSL (oder SDSL oder XDSL) und ISDN ermöglicht.

Die Erfindung stellt zudem ein Verfahren zum Filtern von ersten Signalen aus Signalgemischen beinhaltend eine erste Signalkomponente und eine erste zugehörige Gleichstromkomponente und eine zweite Signalkomponente vor, dass dadurch gekennzeichnet ist, dass zunächst die erste Signalkomponente und die erste Gleichstromkomponente eines empfangenen Signalgemisches voneinander getrennt werden, dass die erste Signalkomponente einem bestimmten Filter zugeführt wird, und dass anschließend die gefilterte Signalkomponente weiterverarbeitet wird.

Die erste Signalkomponente beinhaltet beispielsweise eine digitale Telefonsignalkomponente (z.B. ISDN), die erste Gleichstromkomponente eine zugehörige Gleichstromkomponente und die zweite Signalkomponente eine digitale Datensignalkomponente (z.B. XDSL).

Die Erfindung ist somit nicht auf die Integration von ADSL und ISDN bzw. POTS beschränkt, sondern kann insbesondere auf alle Systeme übertragen werden, in denen eine Trennung zwischen mindestens zwei unterschiedlichen Informationssignalen, wobei mindestens eines zusammen mit einer Gleichstromkomponente übertragen wird, erfolgen muss.

Die Erfindung wird im folgenden anhand eines Ausführungsbeispiel unter Zuhilfenahme von drei Figuren erläutert. Es zeigen:
- Fig. 1: eine schematische Darstellung eines Ausschnitts eines Kommunikationsnetzes zur Übertragung von ADSL und ISDN/POTS,
- Fig. 2: eine schematische Darstellung einer erfindungsgemäßen Einrichtung und
- Fig. 3: einen schematischen Aufbau eines Filters der Einrichtung aus Fig. 2.

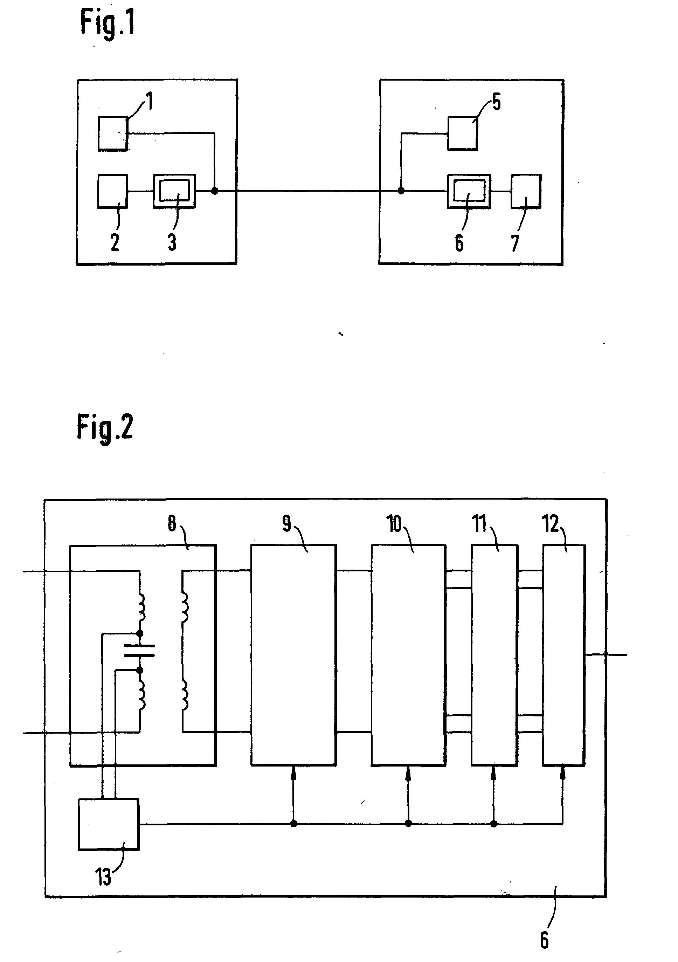

Das Ausführungsbeispiel wird nun zunächst anhand von Fig. 1 erläutert. Fig. 1 zeigt einen Ausschnitt eines Kommunikationsnetzes zur Übertragung von ADSL und ISDN/POTS. Das Kommunikationsnetz ist ein übliches Fernsprechnetz, bei dem es von einer Vermittlungsstelle Punkt-zu-Punkt Verbindungen zu einzelnen Teilnehmern gibt. Die Teilnehmer können sowohl ISDN als auch POTS Kunden sein. Das Kommunikationsnetz unterstützt somit sowohl die alten analogen Anschlüsse als auch die digitalen ISDN Anschlüsse. Zusätzlich ist das Kommunikationsnetz ADSL-fähig gemacht. Jeder ADSL Kunde hat ein ADSL-Modem 5, über das der ADSL Verkehr abgewickelt wird, z.B. Internetzugänge. Über eine Leitung 4 zwischen der Vermittlungsstelle und einem Teilnehmer werden somit gleichzeitig zwei Dienste angeboten ADSL und ISDN oder ADSL und POTS. Eine Einrichtung 3 auf der Vermittlungsseite und eine Einrichtung 6 auf Teilnehmerseite sorgen für eine Filterung der ISDN bzw. POTS Signale. Der Teilnehmer im Beispiel ist ein ADSL und ISDN Kunde. Er hat ein ADSL Modem 5 für die ADSL Dienste. Er hat eine Einrichtung 6 zur Filterung der ISDN Signale aus dem von der Vermittlungsstelle empfangenen Signalgemisch beinhaltend ADSL Signale, ISDN Signale sowie ISDN Gleichstromkomponenten. Die Ausgangssignale der Einrichtung 6 enthalten auf der Teilnehmerseite lediglich ISDN Signale (SO-Schnittstelle), aber keine ADSL Signale mehr. Die Einrichtung 6 ist zusätzlich als NTBA mit zwei Nutzinformationskanälen (zwei 64 kbit/s B-Kanäle) und einem Signalisierungskanal (ein 16 kbit/s D-Kanal) ausgeführt; NTBA=Network Termination Basic rate Access. Die Einrichtung 6 stellt somit eine Netzabschlusseinrichtung mit integrierter Filterfunktion dar, die insbesondere ihre Anwendung findet in Netzen, in denen außer ISDN Signalen zusätzliche Dienste angeboten werden, z.B. XDSL, die üblicherweise in einem anderen Frequenzbereich übertragen werden, so dass die ISDN Signale mittels eines Filters separiert werden können. Denkbar ist eine Anwendung der Einrichtung 6 auch in Kabelfernsehverteilnetzen, die mittels eines Rückkanals aufgerüstet werden, so dass außer der Verteilung von Fernsehsignalen auch kommunikative Dienste, wie z.B. ISDN als overlay angeboten werden können. Auch in Power Line Netzen, bei denen die ISDN Signale beim Teilnehmer separiert werden müssen, ist der Einsatz der Einrichtung 6 möglich. An die Einrichtung 6 können bis zu acht Endgeräte 7 angeschlossen werden, z.B. ein ISDN Telefon, ein Faxgerät, ein Bildtelefon, etc. Die von einem Teilnehmer zur Vermittlungsstelle übertragenen ADSL Informationen, z.B. Abrufsignale, gelangen über ein ADSL Modul 1 in ein vom Fernsprechnetz unabhängiges Netz, z.B. zu einem Service Provider, der einen Internetzugang bereitstellt. Die von einem Teilnehmer zur Vermittlungsstelle übertragenen ISDN Informationen, z.B. Telefonsignale, gelangen über die Einrichtung 3, die alle ADSL Signale ausblendet und die ISDN Signale gefiltert weiterleitet zu einem ISDN Modul 2 und von da aus ins ISDN Netz. Anstelle der Kombination ADSL und ISDN kann auch die Kombination ADSL und POTS verwendet werden. Dann ist das Modul 2 ein POTS Modul und die Einrichtung 6 ein POTS Netzabschluss mit integrierter Filterfunktion. Als Endgeräte 7 werden POTS Endgeräte, z.B. analoge Telefone, verwendet.

Das Ausführungsbeispiel wird nun weiter anhand von Fig. 2 erläutert. Fig. 2 zeigt eine erfindungsgemäße Einrichtung zur Filterung von ISDN. Die Einrichtung entspricht der Einrichtung 6 aus Fig. 1. Die Einrichtungen 3 und 6 aus Fig. 1 gleichen sich im Aufbau mit dem Unterschied, dass in der Einrichtung 6 zusätzlich ein Modul zur Bereitstellung einer SO-Schnittstelle vorhanden ist sowie in der Einrichtung 3 die Einspeisung der Gleichstromkomponente erfolgt und in der Einrichtung 6 die Gleichstromkomponente empfangen wird, so dass auf eine detaillierte Beschreibung der Einrichtung 3 verzichtet wird. Sowohl für die Kombination ADSL und ISDN als auch ADSL und POTS können die Einrichtungen 3 und 6 verwendet werden. Sie sind daher universell einsetzbar.

Einrichtung 6 beinhaltet eine Reihenschaltung aus einer Weiche 8, einem Filter 9, einer Verarbeitungseinrichtung 10, einem Modul 11 zur Bereitstellung einer U-Schnittstelle und ein Modul 12 zur Bereitstellung einer SO-Schnittstelle. Die Einrichtung 6 beinhaltet des weiteren einen DC/DC-Wandler 13.

Bei einer ISDN Verbindung zwischen Vermittlungsstelle und Teilnehmer werden ISDN Signalkomponenten (Nutzinformation) und Gleichstromkomponenten (zum Zwecke der Fernspeisung) von der Vermittlungsstelle zum Teilnehmer übertragen. Sowohl die ISDN Signalkomponenten als auch die ISDN Gleichstromkomponenten werden von Weiche 8 empfangen. Weiche 8 beinhaltet einen Übertrager, der aus einer Primärseite und einer Sekundärseite aufgebaut ist. Die Primärseite beinhaltet eine Reihenschaltung aus einer ersten Spule, einem Kondensator und einer zweiten Spule, wobei die Gleichstromkomponente zwischen dem Kondensator und der ersten Spule und zwischen dem Kondensator und der zweiten Spule abgegriffen wird. Die Sekundärseite beinhaltet eine Reihenschaltung aus einer dritten und vierten Spule. Der Übertrager dient zur galvanischen Trennung, wodurch Interferenzen minimiert werden. Die ISDN Signalkomponente wird von der Primärseite zur Sekundärseite übertragen und dem Filter 9 zugeführt. Die ISDN Gleichstromkomponente wird auf der Primärseite abgegriffen und über separate Leitungen zum DC/DC-Wandler 13 übertragen, d.h. sie wird insbesondere nicht über das Filter 9 übertragen.

Das Filter 9 beinhaltet ein ISDN-Filter, das z.B. als Tiefpass ausgestaltet sein kann. Der Tiefpass hat z.B. eine Grenzfrequenz von 60 MHz. Das Filter 9 hat die Aufgabe die ISDN-Signalkomponenten im empfangenen Signalgemisch zu selektieren und weiterzuleiten. Alle Signalkomponenten unterhalb der Grenzfrequenz werden weitergeleitet; dies sind bei einem XDSL/ISDN Kunden die ISDN Signale. Alle Signalkomponenten oberhalb der Grenzfrequenz werden nicht weitergeleitet; dies sind bei einem XDSL/ISDN Kunden die XDSL Signale. Die XDSL Signale gelangen zum XDSL Modem, in dem sie weiter verarbeitet werden.

DC/DC-Wandler 13 dient zur Bereitstellung der Versorgungsspannung für das Filter 9 aus der Fernspeisespannung. Ein Teil der ISDN Gleichstromkomponente wird DC/DC gewandelt, z.B. von 100 Volt in 5 Volt und dem ISDN Filter zugeführt. Das Filter 9 kann auch als passives Filter ausgestaltet sein, dann wird keine Speisung benötigt. DC/DC-Wandler 13 speist darüber hinaus die Bauelemente 10, 11, 12.

Die in Filter 9 gefilterten ISDN Signalkomponenten werden der Verarbeitungseinrichtung 10 zugeführt, in der eine erste Auswertung erfolgt. Die Verarbeitungseinrichtung beinhaltet beispielsweise einen Prozessor, einen Speicher, einen Entzerrer, einen Kodierer, einen Komprimierer, einen Dekodierer, einen Dekomprimierer, etc. Im Modul 11 wird eine Protokollanpassung derart durchgeführt, dass eine standardisierte ISDN-U-Schnittstelle zur Verfügung gestellt werden kann. Im Modul 12 wird eine Protokollanpassung derart durchgeführt, dass eine standardisierte ISDN-S0-Schnittstelle zur Verfügung gestellt werden kann, die als Schnittstelle zu den ISDN-Endgeräten dient.

Zusätzlich kann in den DC/DC-Wandler 13 ein Detektor integriert werden. Der Detektor hat die Aufgabe, zu ermitteln, welche Spannung über die Fernspeisung übertragen wird. ISDN Signale werden üblicherweise zusammen mit einer Speisespannung von ca. 100 Volt übertragen. Der Detektor ist beispielsweise als Schwellenwertdetektor ausgeführt. Die Schwelle liegt z.B. bei 95 Volt. Erst wenn eine Speisespannung detektier detektiert wird, wird der DC/DC-Wandler und somit die gesamte Netzabschlusseinrichtung aktiviert. Dies spart Strom.

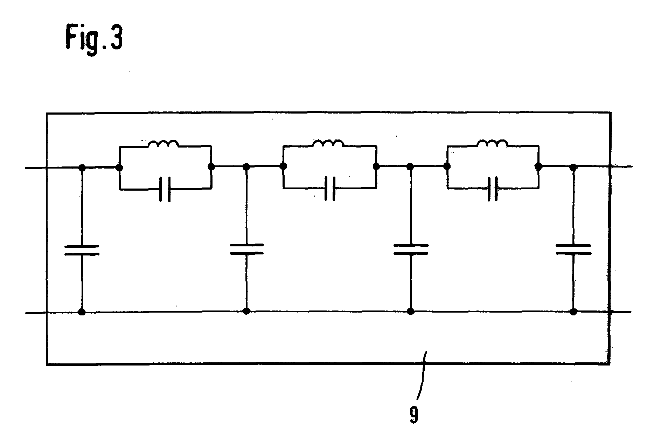

Das Ausführungsbeispiel wird nun weiter anhand von Fig. 3 erläutert. Fig. 3 zeigt eine Ausgestaltung des erfindungsgemäßen Filters 9 aus Fig. 2. Das Filter 9 beinhaltet ein ISDN Filter. Das ISDN Filter hat im Längszweig eine Reihenschaltung aus drei LC-Gliedern. Jedes LC-Glied beinhaltet eine Parallelschaltung aus einer Spule und einem Kondensator. Es sind vier Querzweige vorgehen, die jeweils einen Kondensator beinhalten. Die Werte der Kondensatoren und Spulen sind so gewählt, dass sie die Filtereigenschaft im für die Übertragung der ISDN Signale vorgegebenen Frequenzbereich optimiert durchführen können. Das ISDN Filter kann auch als duale oder äquivalente Schaltung zu obiger Konfiguration ausgeführt sein.

Beim Ausführungsbeispiel beinhaltet die Weiche einen Übertrager. Anstelle eines Übertragers kann zur galvanischen Trennung auch ein Transformator, ein Opto-Koppler oder ein Gyrator verwendet werden.

## Patentansprüche

1. ISDN-Netzabschlusseinrichtung (3, 6) beinhaltend eine Weiche (8) zur Trennung eines empfangenen Signalgemisches beinhaltend eine ISDN-Signalkomponente und eine ISDN-Gleichstromkomponente und eine Verarbeitungseinrichtung (10) zur Verarbeitung der ISDN-Signalkomponente,
**dadurch gekennzeichnet,**
**dass** zwischen Weiche (8) und Verarbeitungseinrichtung (10) ein ISDN-Filter (9) geschaltet ist.

2. ISDN-Netzabschlusseinrichtung (3, 6) nach Anspruch 1, **dadurch gekennzeichnet, dass** das ISDN-Filter (9) ein Tiefpass-Filter ist.

3. ISDN-Netzabschlusseinrichtung (3, 6) nach Anspruch 1, **dadurch gekennzeichnet, dass** die Weiche (8) einen Übertrager beinhaltet, der aus einer Primärseite und einer Sekundärseite aufgebaut ist, **dass** die Primärseite eine Reihenschaltung aus einer ersten Spule, einem Kondensator und einer zweiten Spule beinhaltet, wobei die Gleichstromkomponente zwischen dem Kondensator und der ersten Spule und zwischen dem Kondensator und der zweiten Spule abgegriffen wird, und **dass** die Sekundärseite eine Reihenschaltung aus einer dritten und vierten Spule beinhaltet.

4. ISDN-Netzabschlusseinrichtung (3, 6) nach Anspruch 1, **dadurch gekennzeichnet, dass** ein DC/DC-Wandler (13) vorgesehen ist, mittels dessen die Gleichstromversorgung für das ISDN-Filter (9) aus der detektierten Gleichstromkomponente gewonnen wird.

5. ISDN-Netzabschlusseinrichtung (3, 6) nach Anspruch 1, **dadurch gekennzeichnet, dass** das ISDN-Filter (9) jeweils aus einem Längszweig und mindestens einem Querzweig aufgebaut sind, wobei im Längszweig eine Reihenschaltung von mindestens zwei LC-Gliedern und in jedem Querzweig ein Kondensator verwendet ist.

6. ISDN-Netzabschlusseinrichtung (3, 6) nach Anspruch 1, **dadurch gekennzeichnet, dass** die Weiche (8) einen Opto-Koppler zur galvanischen Trennung beinhaltet.

7. Verfahren zum Filtern von ersten Signalen aus Signalgemischen beinhaltend eine erste Signalkomponente und eine erste zugehörige Gleichstromkomponente und eine zweite Signalkomponente, **dadurch gekennzeichnet, dass** zunächst die erste Signalkomponente und die erste Gleichstromkomponente eines empfangenen Signalgemisches voneinander getrennt werden, **dass** die erste Signalkomponente einem bestimmten Filter (9) zugeführt wird, und **dass** anschließend die gefilterte Signalkomponente weiterverarbeitet wird.

8. Verfahren nach Anspruch 7, **dadurch gekennzeichnet, dass** die erste Signalkomponente eine ISDN-Signalkomponente ist, die erste Gleichstromkomponente eine ISDN-Gleichstromkomponente, die zweite Signalkomponente eine XDSL-Signalkomponente.

9. Verfahren nach Anspruch 7, **dadurch gekennzeichnet, dass** die erste Signalkomponente eine digitale Telefonsignalkomponente beinhaltet, die erste Gleichstromkomponente eine zugehörige Gleichstromkomponente, die zweite Signalkomponente eine digitale Datensignalkomponente.

10. Einrichtung (3, 6) beinhaltend eine Weiche (8) zur Trennung eines empfangenen Signalgemisches beinhaltend eine erste Signalkomponente und eine Gleichstromkomponente oder zum Empfang einer ersten Signalkomponente sowie eine Verarbeitungseinrichtung (10) zur Verarbeitung der ersten Signalkomponente,
**dadurch gekennzeichnet,**
**dass** zwischen Weiche (8) und Verarbeitungseinrichtung (10) ein Filter (9) geschaltet ist.

11. Einrichtung (3, 6) nach Anspruch 10, **dadurch gekennzeichnet, dass** das empfangene Signalgemisch zusätzlich eine zweite Signalkomponente beinhaltet oder die Weiche (8) zusätzlich zum Empfang einer zweiten Signalkomponente dient und das Filter (9) geeignet ist, die erste und die zweite Signalkomponente zu trennen und nur die erste Signalkomponente weiterzuleiten.
